# FASCICULE DE BREVET EUROPEEN

(11) **EP 3 477 052 B1**
(45) Date de publication et mention de la délivrance du brevet: **21.04.2021**
(21) Numéro de dépôt: 18200940.7
(22) Date de dépôt: 17.10.2018
(51) Int. Cl.: F01D 5/14, F04D 29/32, F04D 29/54, F04D 29/68

(54) **COMPRESSEUR DE TURBOMACHINE AYANT UN PROFIL NON-AXISYMÉTRIQUE DE SURFACE INTER-AUBES**
KOMPRESSOR EINES GASTURBINENMOTORS MIT EINEM NICHT-AXIALSYMMETRISCHEN PROFIL EINER ZWISCHENSCHAUFELFLÄCHE
GAS TURBINE ENGINE COMPRESSOR WITH A NON-AXISYMMETRIC PROFILE OF AN INTER-BLADE SURFACE

(30) Priorité: 26.10.2017 BE 201705766
(43) Date de publication de la demande: 01.05.2019
(73) Titulaire: Safran Aero Boosters SA, 4041 Herstal (BE)
(72) Inventeur: HIERNAUX, Stéphane, 4680 Oupeye (BE)
(74) Mandataire: Lecomte & Partners

(56) Documents cités:
- FR-A1- 3 011 888
- US-A1- 2012 201 692
- US-A1- 2013 136 619
- US-A1- 2015 107 265

## Description

### Domaine technique

L'invention concerne une surface inter-aubes profilée de compresseur. L'invention a également trait à une turbomachine axiale, notamment un turboréacteur d'avion ou un turbopropulseur d'aéronef.

### Technique antérieure

La réunion d'un creux et d'une bosse dans un passage entre deux aubes consécutives de compresseur permet d'améliorer le rendement du turboréacteur correspondant. Ce phénomène s'explique par un meilleur contrôle de l'écoulement dans le passage, via une gestion précise des écoulements secondaires comme des convergences d'écoulement.

Le document FR3011888A1 divulgue un turboréacteur comportant un compresseur de turbomachine. Entre deux aubes consécutives du compresseur, la plateforme montre une surface non-axisymétrique, également désignée par le terme anglo-saxon « Contouring 3D », avec des bosses et des creux. Toutefois, le débit nominal de ce compresseur reste limité Le document US 2013/136619 A1 décrit un autre compresseur selon l'art antérieur.

### Résumé de l'invention

### Problème technique

L'invention a pour objectif de résoudre au moins un des problèmes posés par l'art antérieur. Plus précisément, l'invention a pour objectif d'optimise le débit et le taux de compression. L'invention a également pour objectif de proposer une solution simple, résistante, légère, économique, fiable, facile à produire, commode d'entretien, d'inspection aisée et préservant le rendement.

### Solution technique

L'invention a pour objet un compresseur de turbomachine axiale, notamment un compresseur basse-pression, le compresseur comprenant : une rangée annulaire d'aubes dont une première aube avec une surface extrados, et une deuxième aube avec une surface intrados ; une surface de jonction reliant la surface intrados à la surface extrados, la surface de jonction présentant une bosse principale de volume VB et un creux principal de volume VC; remarquable en ce que le volume de la bosse principale VB est supérieur ou égal au quadruple du volume VC du creux principal. La surface de jonction comprend une bande plane ou axisymétrique séparant circonférentiellement le creux de la bosse. Le fond du creux est formé contre la surface intrados.

Selon des modes avantageux, le compresseur peut comprendre une ou plusieurs des caractéristiques suivantes, prises isolément ou selon toutes les combinaisons techniques possibles, la portée de l'invention étant néanmoins définie uniquement par les revendications. :
- Le ratio VB/VC est supérieur ou égal à dix.
- Le ratio VB/VC est compris entre trente et quarante, bornes incluses.
- La bosse s'étend axialement sur toute la longueur du creux.
- La bosse s'étend sur la majorité de la surface de jonction.
- La bosse s'étend depuis la surface intrados.
- La surface de jonction comprend, selon la circonférence, une moitié côté extrados de la première aube et une moitié côté intrados de la deuxième aube, le sommet de la bosse étant dans la moitié côté extrados.
- La longueur du creux est inférieure à la moitié de la longueur de la bosse.
- La largeur moyenne de la bosse est supérieure ou égale au quintuple de la largeur moyenne du creux.
- La surface de la bosse est supérieure ou égale à dix fois la surface du creux.
- Les aubes comprennent chacune un bord d'attaque, un bord de fuite, la surface intrados et la surface extrados délimitant entre elles un passage axial délimité axialement par les bords de fuite et les bords d'attaque, la bosse et/ou le creux étant renfermé(e)(s) dans ledit passage axial.
- La surface de jonction présente une moitié amont, et une moitié aval dans laquelle le creux est intégré, le sommet de la bosse étant éventuellement dans la moitié amont.
- Le volume VBS de la moitié radiale libre de la bosse principale est supérieur ou égal au volume VC du creux.
- Le compresseur comprend un stator et un rotor monté tournant par rapport au stator, la rangée d'aubes étant solidaire du stator ou du rotor.
- Le compresseur comprend une paroi annulaire sur laquelle sont formés la bosse et le creux, les aubes s'étendant radialement vers l'intérieur ou vers l'extérieur depuis la paroi annulaire, éventuellement la bosse s'étendant axialement sur la majorité de la paroi annulaire.
- La face amont de la bosse est plus raide que la face aval ; éventuellement au moins deux fois.
- La hauteur maximale de la bosse est comprise entre 1% et 5% de la hauteur radiale de la première aube, et/ou la profondeur maximale du creux représente entre 0,50% et 3% de la hauteur radiale de la première aube.
- Le rapport VB/VC est compris entre : 15 et 100, ou 20 et 70, ou 25 et 50 ; bornes incluses.
- La surface de jonction s'étend depuis un axe amont reliant les bords d'attaque, et depuis un axe aval reliant les bords de fuite.
- La surface de jonction délimite radialement le passage axial et/ou est continue.
- La surface de jonction comporte une zone en amont et une zone en aval de la bosse, lesdites zones étant de rayon constant selon la circonférence, notamment de la surface intrados à la surface extrados.
- La surface de jonction présente quatre coins, notamment disposés aux bords d'attaque et aux bords de fuite, lesdits coins définissant un plan par rapport auquel le creux et la bosse sont considérés.
- La première aube et la deuxième aube sont des aubes consécutives et/ou voisines, et/ou inclinées circonférentiellement d'au plus : 10° ou 5°.
- Les aubes de la rangée annulaire sont alignées circonférentiellement, leurs bords d'attaque et leurs bords de fuite sont alignés circonférentiellement.
- Axialement au niveau du bord de fuite, la surface intrados et/ou la surface extrados est parallèle à l'axe de rotation du compresseur.
- Les cordes des aubes sont à inclinaison fixe par rapport à l'axe de rotation du compresseur.
- Le creux est axialement à distance de la moitié amont de la surface de jonction.
- La bosse et/ou le creux commence(nt) à distance axialement des bords d'attaque, et finit/finissent à distance axialement des bords de fuite.
- La bosse et/ou le creux est/sont plus longs que larges.
- La bosse présente une augmentation constante de sa hauteur, notamment sur au moins un tiers ou la majorité de sa surface.
- La bosse et le creux forment un relief traversé axialement par l'aube associée.
- La bosse présente deux bords latéraux parallèles à la surface extrados.
- La bosse présente une moitié amont dans laquelle est disposé son sommet.
- La surface de la bosse représente au moins le triple de la surface de la bande.
- La surface de la bande est supérieure ou égale au double ou au quintuple de la surface du creux.
- La hauteur de la bosse, et/ou la profondeur du creux, mesure au moins :
   0,05mm, ou 0,1mm, ou 0,5mm, ou 2mm.
- La hauteur de la bosse, et/ou la profondeur du creux, mesure au plus :
   2cm, ou 1cm, ou 5mm, ou 3mm.
- La bosse présente un bord amont et/ou un bord aval généralement perpendiculaire(s) à l'axe de rotation.
- Chaque aube comprendre un rayon de raccordement, la surface de jonction s'étendant depuis les rayons de raccordement de la première aube et de la deuxième aube.
- Le sommet comprend une courbe de rayon constant autour de l'axe de rotation.
- Le sommet est plat ou bombé.
- Le creux est concave et/ou forme un amincissement sur le support.
- La bosse est convexe et/ou forme un épaississement sur le support.
- Chaque aube comprend une corde et un espace entre sa surface intrados et ladite corde, le creux et/ou le fond du creux, étant majoritairement ou totalement à l'intérieur dudit espace.
- Perpendiculairement à la corde, l'envergure du creux est inférieure à l'envergure de l'aube.

L'invention a également pour objet une turbomachine, notamment un turboréacteur d'aéronef, comprenant un compresseur conforme à l'invention, la rangée annulaire comprenant préférentiellement au moins : cinquante, ou quatre-vingt, ou cent aubes.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné. La portée de l'invention est néanmoins définie uniquement par les revendications.

### Avantages apportés

L'invention permet de recadrer le flux dans le passage. L'importance de la bosse par rapport au creux tend à repousser partiellement le flux vers l'intrados, tout en limitant les décollements. Ainsi, le débit traversant la grille d'aubes peut augmenter tout en évitant les phénomènes de pompage.

### Brève description des dessins

La figure 1 représente une turbomachine axiale selon l'invention.
La figure 2 est un schéma d'un compresseur de turbomachine selon l'invention.
La figure 3 illustre une vue en plan d'un passage inter-aubes selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

La largeur est mesurée selon la circonférence, la longueur est mesurée axialement, et la hauteur est mesurée radialement.

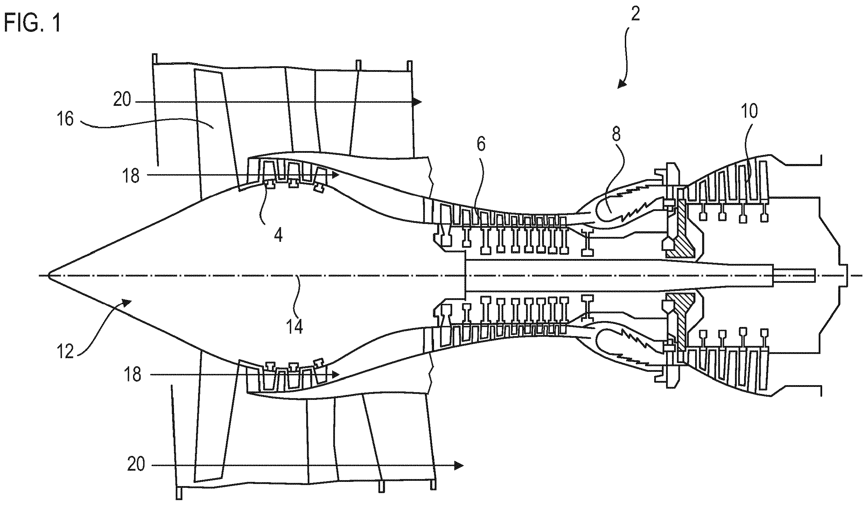

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine.

Le flux secondaire peut être accéléré de sorte à générer une réaction de poussée nécessaire au vol d'un avion. Les flux primaire 18 et secondaire 20 sont des flux annulaires coaxiaux et emmanchés l'un dans l'autre. Ils sont canalisés par le carter de la turbomachine et/ou des viroles.

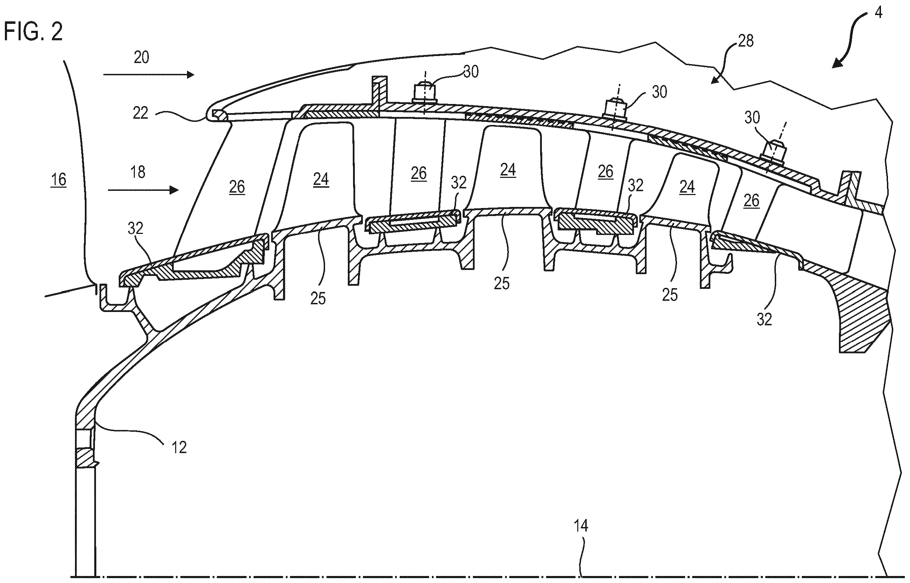

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20.

Le rotor 12 comprend plusieurs rangées d'aubes rotoriques 24, en l'occurrence trois. Il peut être un tambour monobloc aubagé, ou comprendre des aubes à fixation par queue d'aronde. Les aubes rotoriques 24 peuvent s'étendre radialement depuis une plateforme individuelle, ou depuis une couronne interne 25 du rotor 12.

Le compresseur basse-pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression, notamment en pression statique.

Les aubes statoriques 26 s'étendent essentiellement radialement depuis un carter extérieur 28, et peuvent y être fixées et immobilisées à l'aide d'axes 30. Alternativement, les aubes peuvent être collées. Elles traversent radialement le flux primaire 18. Leurs pales peuvent traverser la paroi annulaire du carter extérieur 28. Au sein d'une même rangée, les aubes statoriques 26 sont régulièrement espacées les unes des autres, et présentent une même orientation angulaire dans le flux 18. Leurs cordes peuvent présenter une inclinaison fixe par rapport à l'axe de rotation 14. Avantageusement, les aubes d'une même rangée sont identiques et alignées. Chaque rangée d'aubes (26 ; 24) peut comprendre cent vingt unités.

Des viroles internes 32 peuvent être suspendues aux extrémités internes des aubes statoriques 26. Les viroles internes 32 peuvent coopérer de manière étanche avec le rotor 12 afin d'améliorer le taux de compression du compresseur 4.

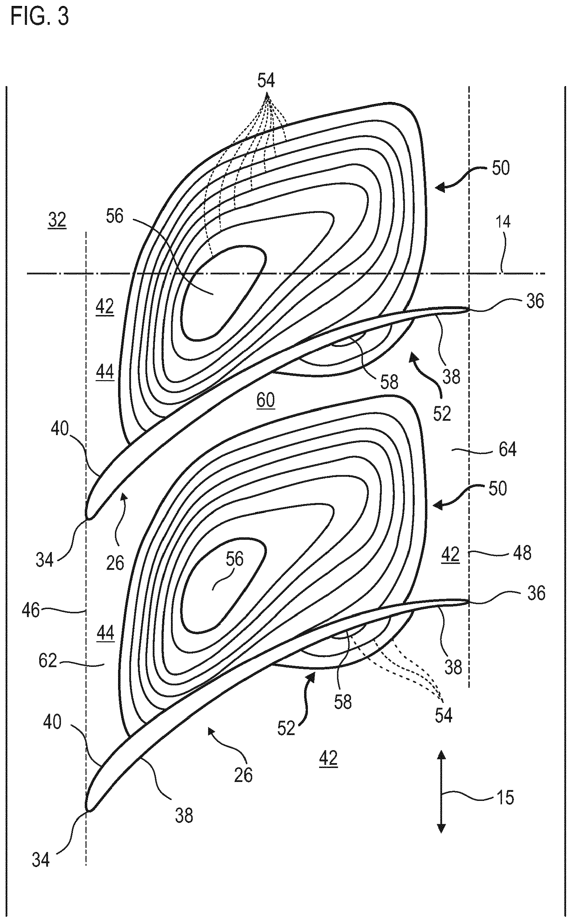

La figure 3 esquisse un support recevant deux aubes. Le support est observé radialement. Optionnellement, la figure 3 est un dessin technique respectant une véritable échelle et des proportions. La direction circonférentielle 15 est perpendiculaire à l'axe de rotation 14, qui symbolise ici la direction axiale.

Les aubes peuvent être des aubes statoriques 26 telles que celles introduites en figure 2. Les aubes 26 peuvent s'étendre radialement depuis la virole interne 32 qui forme alors le support susmentionné.

Chaque aube 26 comprend un bord d'attaque 34, un bord de fuite 36, ainsi qu'une surface intrados 38 et une surface extrados 40. Ces surfaces (38 ; 40) peuvent être incurvées et bombées respectivement. Chacune de ces surfaces s'étend du bord d'attaque au bord de fuite correspondant. Ces surfaces (38 ; 40) délimitent la pale de l'aube. L'aube 26 peut comporter un empilement de profils aérodynamiques cambrés, dont les côtés génèrent la surface intrados 38 et la surface extrados 40. Au niveau des bords de fuite, les contours des profils, en intrados et/ou en extrados, sont parallèles et/ou tangents à l'axe de rotation 14 du compresseur.

Les aubes 26 consécutives de la rangée annulaire définissent entre elles une rangée annulaire de passages 42. Ces passages 42 sont cloisonnés circonférentiellement par les aubes 26, et délimités par les surfaces intrados et extrados. La virole interne 32 présente une surface de jonction 44 entre deux aubes consécutives, et relie la surface intrados 38 qui est en regard de la surface extrados 40 au travers du passage 42. Les surfaces intrados et extrados peuvent être en regard selon la direction circonférentielle 15.

La surface de jonction 44 peut être délimitée axialement par un axe amont 46 et un axe aval 48 qui relient les bords d'attaque 34 et les bords de fuite 36 respectivement. Ces axes (46 ; 48) peuvent être parallèles, et peuvent généralement définir un parallélogramme ou un trapèze. La surface de jonction 44 peut être généralement plane. Plus précisément, elle peut être une partie de surface tubulaire ou une partie de surface de cône, notamment en raison du rayon de la virole, et de l'optionnelle variation de diamètre de la virole 32 le long de l'axe de rotation 14. La surface de jonction 44 peut comprendre quatre coins correspondant aux intersections entre les bords (34 ; 36) et la surface libre du support, notamment de la virole.

La surface de jonction 44 est profilée. Elle présente des reliefs. En un point donné de l'axe de rotation 14, le rayon de la surface de jonction 44 peut varier suivant la direction circonférentielle 15, notamment en se déplaçant d'une aube 26 à sa voisine.

La surface de jonction 44 présente une bosse principale 50, et un creux principal 52. L'aspect principal est, selon l'invention, en relation avec le volume, et peut aussi, selon d'autres exemples, être en liaison avec la surface, et/ou la hauteur, et/ou la profondeur.

La bosse 50 comme le creux 52 sont représentés à l'aide de lignes de niveau 54. Ces lignes de niveau 54 marquent des variations de niveau par rapport à une surface de référence, en l'occurrence la surface de jonction 44. La bosse 50 peut former un relief de hauteur au moins trois fois supérieure à la profondeur du creux 52. Par ailleurs, l'étendue de la bosse 50 peut être au moins huit fois supérieure à l'étendue du creux 52.

Aussi, le volume VB de la bosse 50 est supérieur au volume VC du creux 52. Le ratio VB/VC correspond au volume de la bosse VB divisé par le volume du creux. Selon l'invention, le ratio VB/VC est supérieur ou égal à quatre. Il peut être inférieur à 100. Il peut être compris entre quinze et soixante. Il peut être égal à 35+/-15, ou 35+/-5.

La bosse 50 peut toucher la surface extrados 40 de l'aube 26 associée. Son sommet 56 peut être décalé circonférentiellement de la surface extrados 40. Sur la bosse 50, un col apparaît entre la surface extrados et le sommet 56. Le sommet 56 de la bosse peut être disposé en moitié amont de l'aube 26, et/ou en moitié amont de ladite bosse 50.

Ainsi, la face amont de la bosse peut être plus inclinée par rapport à l'axe de rotation 14 que la surface de la face aval de la bosse. La bosse 50 peut être plus longue que large. Elle peut présenter une forme de parallélogramme. Elle peut être à distance, selon la circonférence 15, de la surface intrados 38 en regard.

D'amont en aval, et au niveau de la bosse 50, la surface de jonction 44 s'éloigne de l'axe de rotation 14, puis s'en rapproche. Les lignes de niveau 54 de la bosse 50 peuvent être régulièrement espacées, par exemple sur la majorité de la surface de la bosse 50. Sur cette majorité de surface, les lignes de niveau 54 peuvent être parallèles. La bosse 50 peut présenter une augmentation constante de sa hauteur, notamment sur au moins un tiers ou la majorité de sa surface. Radialement, la bosse peut être partagée en une moitié s'étendant depuis la surface de jonction 44, et une moitié comprenant le sommet 56, également appelée moitié libre. La moitié radiale libre de la bosse 50, peut présenter un volume VBS supérieur au volume VC du creux 52.

Le creux 52 peut être à distance circonférentiellement de la surface extrados 40. Le creux 52 peut être intégré, majoritairement ou totalement, dans la moitié aval de l'aube 26. Il peut être essentiellement allongé. Sa longueur peut être supérieure à sa largeur, éventuellement au moins deux ou trois fois. Le fond 58 du creux 52 est, selon l'invention, accolé à la surface intrados 38 associée.

Une bande 60, plane ou axisymétrique, sépare la bosse 50 du creux 52. Cette bande 60 peut raccorder circonférentiellement le creux 52 à la bosse 50. Elle peut s'étendre sur toute la longueur de la bosse 50. En dehors de la bosse 50 et du creux 52, la surface de jonction 44 peut présenter une zone amont 62 et une zone aval 64. Ces zones (62 ; 64) peuvent être reliées par la bande 60. La bosse 50 s'étend sur toute la longueur du creux 52, et peut s'étendre au-delà, en amont et/ou en aval. La zone amont 62 et la zone aval 64 peuvent être délimitées axialement par l'axe amont 46 et le bord amont de la bosse 50 ; et par le bord aval de la bosse et l'axe aval 48 ; respectivement.

Les zones (62 ; 64) peuvent chacune être axisymétrique. En chaque point de l'axe de rotation 14, elles présentent un rayon constant autour dudit axe 14. Elles peuvent être formées de courbes de rayons constants autour de l'axe de rotation 14, les rayons étant perpendiculaires audit axe.

Bien que seulement deux aubes 26 ne soient représentées, le présent enseignement peut s'appliquer à toute leur rangée annulaire, ou à plusieurs, ou à chaque rangée annulaire d'aubes statoriques du compresseur. De même, la surface de jonction peut être reproduite à l'identique entre chaque aube voisine d'une même rangée. Cela peut former une rangée annulaire de bosses 50 identiques ainsi qu'une rangée annulaire de creux 52 identiques.

## Revendications

1. Compresseur (4 ; 6) de turbomachine (2), notamment un compresseur basse-pression (4), le compresseur (4 ; 6) comprenant :
- une rangée annulaire d'aubes (26) dont une première aube (26) avec une surface extrados (40), et une deuxième aube (26) avec une surface intrados (38) ;
- une surface de jonction (44) reliant la surface intrados (38) à la surface extrados (40), la surface de jonction (44) présentant une bosse principale (50) de volume VB et un creux principal (52) de volume VC, un fond (58) du creux principal (52) étant formé contre la surface intrados (38);
**caractérisé en ce que**
le volume de la bosse principale (50) VB est supérieur ou égal au quadruple du volume VC du creux principal (52),
et la surface de jonction (44) comprend une bande (60) plane ou axisymétrique séparant circonférentiellement le creux (52) de la bosse (50).

2. Compresseur (4 ; 6) selon la revendication 1, **caractérisé en ce que** le ratio VB/VC est supérieur ou égal à dix.

3. Compresseur (4 ; 6) selon l'une des revendications 1 à 2, **caractérisé en ce que** le ratio VB/VC est compris entre trente et quarante, valeurs incluses.

4. Compresseur (4 ; 6) selon l'une des revendications 1 à 3, **caractérisé en ce que** la bosse (50) s'étend axialement sur toute une longueur du creux (52).

5. Compresseur (4 ; 6) selon l'une des revendications 1 à 4, **caractérisé en ce que** la bosse (50) s'étend depuis la surface extrados (40).

6. Compresseur (4 ; 6) selon l'une des revendications 1 à 5, **caractérisé en ce que** la surface de jonction (44) comprend, selon la circonférence, une moitié côté extrados (40) de la première aube (26) et une moitié côté intrados (38) de la deuxième aube (26), un sommet (56) de la bosse (50) étant dans la moitié côté extrados (40).

7. Compresseur (4 ; 6) selon l'une des revendications 1 à 6, **caractérisé en ce qu'**une longueur du creux (52) est inférieure à la moitié d'une longueur de la bosse (50).

8. Compresseur (4 ; 6) selon l'une des revendications 1 à 7, **caractérisé en ce qu'**une largeur moyenne de la bosse (50) est supérieure ou égale au quintuple d'une largeur moyenne du creux (52).

9. Compresseur (4 ; 6) selon l'une des revendications 1 à 8, **caractérisé en ce qu'**une surface de la bosse (50) est supérieure ou égale à dix fois une surface du creux (52).

10. Compresseur (4 ; 6) selon l'une des revendications 1 à 9, **caractérisé en ce que** les aubes (26) comprennent chacune un bord d'attaque (34), un bord de fuite (36), la surface intrados (38) et la surface extrados (40) délimitant entre elles un passage axial (42) délimité axialement par les bords de fuite et les bords d'attaque, la bosse (50) et/ou le creux (52) étant renfermé(e)(s) dans ledit passage axial (42).

11. Compresseur (4 ; 6) selon l'une des revendications 1 à 10, **caractérisé en ce que** la surface de jonction (44) présente une moitié amont, et une moitié aval dans laquelle le creux (52) est intégré, le sommet (56) de la bosse (50) étant éventuellement dans ladite moitié amont.

12. Compresseur (4 ; 6) selon l'une des revendications 1 à 11, **caractérisé en ce qu'**il comprend une paroi annulaire sur laquelle sont formés la bosse (50) et le creux (52), les aubes (26) s'étendant radialement vers l'intérieur ou vers l'extérieur depuis la paroi annulaire, éventuellement la bosse (50) s'étendant axialement sur la majorité de la paroi annulaire.

13. Compresseur (4 ; 6) selon l'une des revendications 1 à 12, **caractérisé en ce qu'**une face amont de la bosse (50) est plus raide qu'une face aval ; éventuellement au moins deux fois.

14. Compresseur (4 ; 6) selon l'une des revendications 1 à 13, **caractérisé en ce qu'**une hauteur maximale de la bosse (50) est comprise entre 1% et 5% d'une hauteur radiale de la première aube (26), et/ou une profondeur maximale du creux (52) représente entre 0,50% et 3% d'une hauteur radiale de la première aube (26).

15. Turbomachine (2), notamment un turboréacteur d'aéronef, comprenant un compresseur (4 ; 6), **caractérisée en ce que** le compresseur (4 ; 6) est conforme à l'une des revendications 1 à 14, la rangée annulaire comprenant préférentiellement au moins : cinquante, ou quatre-vingt, ou cent aubes (26).

## Patentansprüche

1. Verdichter (4; 6) für eine Turbomaschine (2), insbesondere ein Niederdruckverdichter (4), wobei der Verdichter (4; 6) umfasst:
- eine ringförmige Anordnung von Schaufeln (26), wobei eine erste Schaufel (26) eine Druckfläche (40) und eine zweite Schaufel (26) eine Saugfläche (38) aufweist;
- eine Verbindungsfläche (44), die die Saugfläche (38) mit der Druckfläche (40) verbindet, wobei die Verbindungsfläche (44) eine Haupthöcker (50) des Volumens VB und eine Hauptmulde (52) des Volumens VC aufweist, wobei der Boden (58) der Hauptmulde (52) an der Saugfläche (38) ausgebildet ist;
**dadurch gekennzeichnet, dass** das Volumen der Haupthöcker (50) größer oder gleich dem Vierfachen des Volumens VC der Hauptmulde (52) ist, und die Verbindungsfläche (44) einen flachen oder achsensymmetrischen Streifen (60) umfasst, der die Hauptmulde (52) in Umfangsrichtung von dem Höcker (50) trennt.

2. Verdichter (4; 6) nach Anspruch 1, **dadurch gekennzeichnet, dass** das Verhältnis VB/VC größer oder gleich zehn ist.

3. Verdichter (4; 6) nach Anspruch 1 bis 2, **dadurch gekennzeichnet, dass** das Verhältnis VB / VC zwischen dreißig und vierzig liegt, einschließlich eingeschlossener Werte.

4. Verdichter (4; 6) nach Anspruch 1 bis 3, **dadurch gekennzeichnet, dass** der Höcker (50) sich axial über die gesamte Länge der Mulde (52) erstreckt.

5. Verdichter (4; 6) nach einem der Ansprüche 1 bis 4, **dadurch gekennzeichnet, dass** sich der Höcker ab der Druckfläche (40) erstreckt.

6. Verdichter (4; 6) nach einem der Ansprüche 1 bis 5, **dadurch gekennzeichnet, dass** die Verbindungsfläche (44) in Umfangsrichtung eine Hälfte der Druckseite (40) des ersten Flügels (26) und eine Hälfte der Saugseite (38) des zweiten Flügels (26) umfasst, wobei eine Erhebung (56) des Höckers (50) in der Hälfte der Druckseite (40) liegt.

7. Verdichter (4; 6) nach einem der Ansprüche 1 bis 6, **dadurch gekennzeichnet, dass** eine Länge der Mulde (52) geringer ist als die Hälfte einer Länge des Höckers (50).

8. Verdichter (4; 6) nach einem der Ansprüche 1 bis 7, **dadurch gekennzeichnet, dass** eine mittlere Länge des Höckers (50) größer oder gleich dem Fünffachen der mittleren Länge der Mulde (52) ist.

9. Verdichter (4; 6) nach einem der Ansprüche 1 bis 8, **dadurch gekennzeichnet, dass** eine Fläche des Höckers (50) größer oder gleich dem Zehnfachen einer Fläche der Mulde (52) ist.

10. Verdichter (4; 6) nach einem der Ansprüche 1 bis 9, **dadurch gekennzeichnet, dass** jede der Schaufeln (26) eine Eintrittskante (34) und eine Hinterkante (36) umfasst, die Saugfläche (38) und die Druckfläche (40) zwischen sich eine axiale Passage (42) begrenzen, axial durch die Hinterkanten und die Eintrittskanten begrenzt, wobei der Höcker (50) und / oder die Mulde (52) in der axialen Passage (42) eingeschlossen sind.

11. Verdichter (4; 6) nach einem der Ansprüche 1 bis 10, **dadurch gekennzeichnet, dass** die Verbindungsfläche (44) eine stromaufwärtige Hälfte und eine stromabwärtige Hälfte aufweist, in die die Mulde (52) integriert ist, wobei sich die Oberseite (56) der Höcker (50) möglicherweise in der stromaufwärtigen Hälfte befindet.

12. Verdichter (4; 6) nach einem der Ansprüche 1 bis 11, **dadurch gekennzeichnet, dass** eine ringförmige Wand aufweist, an der der Höcker (50) und der Hohlraum (52) ausgebildet sind, wobei sich die Schaufeln (26) von der ringförmigen Wand radial nach innen oder außen erstrecken, wobei sich der Höcker (50) optional axial über den größten Teil der ringförmigen Wand erstreckt.

13. Verdichter (4; 6) nach einem der Ansprüche 1 bis 12, **dadurch gekennzeichnet, dass** eine stromaufwärts gelegene Fläche des Höckers (50) steiler ist als eine stromabwärts gelegene Fläche; möglicherweise mindestens zweimal.

14. Verdichter (4; 6) nach einem der Ansprüche 1 bis 13, **dadurch gekennzeichnet, dass** eine maximale Höhe des Höckers (50) zwischen 1 % und 5 % einer radialen Höhe der ersten Schaufel (26) liegt, und/oder eine maximale Tiefe der Mulde (52) zwischen 0,50 % und 3 % einer radialen Höhe der ersten Schaufel (26) liegt.

15. Turbomaschine (2), insbesondere Flugzeugtriebwerk, mit einem Verdichter (4; 6), **dadurch gekennzeichnet, dass** der Verdichter (4; 6) einem der Ansprüche 1 bis 14 entspricht, wobei die ringförmige Anordnung vorzugsweise mindestens: fünfzig, oder achtzig, oder hundert Schaufeln (26) umfasst.

## Claims

1. Compressor (4; 6) for a turbine engine (2), preferably a low-pressure compressor (4), the compressor (4; 6) comprising:
- an annular row of blades (26) including a first blade (26) with an extrados surface (40), and a second blade (26) with an intrados surface (38);
- a connecting surface (44) joining the intrados surface (38) to the extrados surface (40), the connecting surface (44) having a main bulge (50) of volume VB and a main recess (52) of volume VC, a bottom (58) of the main recess (52) being formed against the intrados surface (38);
**characterized in that**
the volume of the main bulge (50) VB is greater than or equal to four times the volume VC of the main recess (52),
and the connecting surface (44) comprises a flat or axisymmetric band (60) circumferentially separating the main bulge (50) from the main recess (52).

2. Compressor (4; 6) according to claim 1, **characterized in that** the ratio VB/VC is greater or equal to ten.

3. Compressor (4; 6) according to any of claims 1-2, **characterized in that** the ratio VB/VC is comprised in a range of thirty to forty, boundaries of the range included.

4. Compressor (4; 6) according to any of claims 1-3, **characterized in that** the main bulge (50) extends axially along a whole length of the main recess (52).

5. Compressor (4; 6) according to any of claims 1-4, **characterized in that** the main bulge (50) extends from the extrados surface (40).

6. Compressor (4; 6) according to any of claims 1-5, **characterized in that** the connecting surface (44) comprises a circumferential half on the side of the extrados surface (40) of the first blade (26), and a circumferential half on the side of the intrados (38) of the second blade (26), the top of the main bulge (50) being in the half on the side of the extrados surface (40).

7. Compressor (4; 6) according to any of claims 1-6, **characterized in that** a length of the main recess (52) is less than half of a length of the main bulge (50).

8. Compressor (4; 6) according to any of claims 1-7, **characterized in** an average width of the main bulge (50) is greater or equal to five times an average width of the recess (52).

9. Compressor (4; 6) according to any of claims 1-8, **characterized in that** an area of the main bulge (50) is greater or equal to ten times an area of the main recess (52).

10. Compressor (4; 6) according to any of claims 1-9, **characterized in that** the blades (26) each comprise a leading edge (34), a trailing edge (36), the intrados surface (38) and the extrados surface (40) delimiting between them a passageway (42) delimited axially by the trailing edges and the leading edges, the main bulge (50) and/or the main recess (52) being enclosed in said passageway.

11. Compressor (4; 6) according to any of claims 1-10, **characterized in that** the connecting surface (44) has an upstream half, and a downstream half receiving the recess (52), the top (56) of the main bulge (50) being arranged in said upstream half and the main recess (52) being preferably arranged in said upstream half.

12. Compressor (4; 6) according to any of claims 1-11, **characterized in that** the compressor comprises an annular wall on which the main bulge (50) and the main recess (52) are formed, the blades (26) extending radially inwardly or outwardly from the annular wall, the bulge (50) extending axially over more than half of the annular wall.

13. Compressor (4; 6) according to any of claims 1-12, **characterized in that** an upstream surface of the bulge (50) is steeper, potentially two times steeper, than a downstream surface.

14. Compressor (4; 6) according to any of claims 1-13, **characterized in that** a radial height of the main bulge (50) is comprised between 1% and 5% of a radial height of the first blade (26) and/or a depth of the main recess (52) is between 0,50% and 3% of a radial height of the first blade (26).

15. Turbomachine (2), preferably an aircraft turbine engine, comprising a compressor (4; 6), **characterized in that** the compressor (4; 6) is according to any of claims 1 to 14, the annular row comprising preferably at least: fifty, or eighty, or a hundred blades (26).
